Europäisches Patentamt

European Patent Office

Office européen des brevets

(19)

(11) Veröffentlichungsnummer: **0 033 014**
A1

(12) # EUROPÄISCHE PATENTANMELDUNG

(21) Anmeldenummer: 80108205.8

(22) Anmeldetag: 24.12.80

(51) Int. Cl.³: **H 04 L 9/02**
H 04 K 1/02, G 09 C 1/00

(30) Priorität: 04.02.80 DE 3003998

(43) Veröffentlichungstag der Anmeldung:
05.08.81 Patentblatt 81/31

(84) Benannte Vertragsstaaten:
AT CH DE FR GB IT LI LU NL SE

(71) Anmelder: Licentia Patent-Verwaltungs-GmbH
Theodor-Stern-Kai 1
D-6000 Frankfurt/Main 70(DE)

(72) Erfinder: Ostermann, Bernd, Dipl.-Ing.
Ginsterhalde 8
D-7153 Weissach im Tal(DE)

(72) Erfinder: Bitzer, Wolfgang, Dipl.-Ing.
Rechbergstrasse 15
D-7153 Weissach im Tal(DE)

(74) Vertreter: Schickle, Gerhard, Dipl.-Ing. et al,
Licentia Patent-Verwaltungs-GmbH Theodor-Stern-Kai
1
D-6000 Frankfurt/Main 70(DE)

(54) System zur Ver- und Entschlüsselung von Daten.

(57) System zur Ver- und Entschlüsselung von Daten, die zwischen Sender und Empfänger übertragen werden, wobei sende- bzw. empfangsseitig die Nachrichtenklartexte mittels gleicher Verknüpfungsvorschrift verschlüsselt bzw. widergewonnen werden und die Verknüpfungsvorschrift durch Schlüsselrechner jeweils mit Hilfe eines sowohl im Sender als auch im Empfänger gespeicherten und das Programm der Schlüsselrechner festlegenden Schlüssels erzeugt wird. Bei diesem System ist mindestens der eine Schlüsselrechner beim Sender bzw. Empfänger ein frei programmierbarer Rechner, in dessen Programmspeicher das Programm des anderen Schlüsselrechners beim Empfänger bzw. Sender übermittelbar ist. Dadurch ist ein freizügiger verschlüsselter Informationsaustausch unter Mitverwendung bisher auf dem Markt eingeführter Schlüsselgerätetypen möglich.

EP 0 033 014 A1

Croydon Printing Company Ltd.

- 1 -

Licentia Patent-Verwaltungs-GmbH
Theodor-Stern-Kai 1
D-6000 Frankfurt 70

NE2-BK/Ruf/jo
BK 79/88

System zur Ver- und Entschlüsselung von Daten

Die Erfindung betrifft ein System zur Ver- und Entschlüsselung von Daten, die zwischen Sender und Empfänger übertragen werden, wobei sende- bzw. empfangsseitig die Nachrichtenklartexte mittels gleicher Verknüpfungsvorschrift verschlüsselt bzw. wiedergewonnen und die Verknüpfungsvorschrift durch Schlüsselrechner jeweils mit Hilfe eines sowohl im Sender als auch im Empfänger gespeicherten und das Programm der Schlüsselrechner festlegenden Schlüssels erzeugt werden.

Ein solches System ist beispielsweise durch die Deutsche Offenlegungsschrift 29 43 726 bekannt geworden. Auf dem Markt befindet sich eine ganze Reihe von solchen Systemen, deren Schlüsselrechner nach speziellen Algorithmen arbeiten und durch dementsprechende Digitalschaltungen, beispielsweise integrierte Großschaltkreise (LSI) realisiert sind. Nachteilig ist bei diesen Systemen, daß immer nur Systeme mit gleichem Schlüsselalgorithmus zusammenarbeiten können. Im Rahmen der Einführung immer weitreichenderer, auch internationaler Netze ist jedoch ein verschlüsselter Informationsaustausch in zunehmendem Maße gefordert. Hierzu wäre eine Normung der Schlüsselalgorithmen erforderlich. Eine derartige Normung ist jedoch auf lange Zeit noch nicht abzusehen, nicht zuletzt deshalb, weil bereits Schlüsselgeräte mit den unterschiedlichsten Schlüsselalgorithmen eingeführt sind.

Aufgabe der Erfindung war es deshalb, ein Schlüsselsystem anzugeben, das einen freizügigen verschlüsselten Informationsaustausch ermöglicht, ohne daß eine Normung der Schlüsselalgorithmen vorausgesetzt werden muß und wobei bereits eingeführte Schlüsselgeräte weiterverwendet werden können.

Die Lösung erfolgt mit den in den Patentansprüchen angegebenen Mitteln.

Der Einsatz des erfindungsgemäßen Schlüsselsystems läßt einen freizügigen verschlüsselten Informationsaustausch zu, ohne daß eine Normung auf einen einheitlichen Schlüsselalgorithmus erforderlich ist. Weiterhin ist von Vorteil, daß die auf dem Markt eingeführten Schlüsselgerätetypen weiterhin verwendet werden können.

Die Erfindung geht von der Idee aus, bei einer verschlüsselten Datenverbindung mindestens einen der Partner mit einem Schlüsselgerät auszurüsten, das über einen frei programmierbaren Rechner verfügt, in dessen Programmspeicher der Schlüsselalgorithmus des Partnergerätes, mit dem der verschlüsselte Nachrichtenverkehr abgewickelt werden soll, einspeicherbar ist. Der Schlüsselalgorithmus kann beispielsweise vorher von dem Partnerschlüsselgerät übertragen werden. Die Übermittlung des Schlüsselalgorithmus des Partnerschlüsselgerätes kann sowohl über einen separaten Nachrichtenkanal als auch über den Verschlüsselungskanal erfolgen. In einer vorteilhaften Ausgestaltung der Erfindung wird die Übermittlung des Schlüsselprogramms auf Anforderung des frei programmierbaren Schlüsselrechners veranlaßt. Der Vorteil liegt darin, daß bei einer zweiten Datenverbindungsaufnahme mit demselben Partner das Schlüsselprogramm nicht noch einmal zu übertragen werden braucht. Verfügt der frei programmierbare Schlüsselrechner über einen Hintergrundspeicher, so können in diesen mehrere verschiedene Schlüsselprogramme abgespeichert werden und je nach Bedarf zur Einspeicherung in den Programmspeicher aufgerufen werden. Als einfachste Lösung wird die Verwendung eines Lochstreifenlesers vorgeschlagen, über den das auf Lochstreifen gestanzte Schlüsselprogramm des Partners eingegeben werden kann.

Eine andere Ausgestaltung der Erfindung sieht eine zentrale Stelle vor, die beispielsweise über ein öffentliches Wählnetz anwählbar ist und die das gewünschte Schlüsselprogramm aufgrund der gewählten Teilnehmernummer bzw. einer zugefügten Teilnehmerkennung zur Verfügung stellt oder stellen läßt. Vorteilhaft ist dabei die weitere Ausgestaltung der Erfindung derart, daß die zentrale Stelle automatisch bei der Wahl der Teilnehmernummer erreichbar ist, so daß die in der zentralen Stelle gespeicherten Schlüsselprogramme nach Bedarf abgerufen werden können.

Wertvolle Übertragungszeit kann eingespart werden, wenn der frei programmierbare Schlüsselrechner über einen Hintergrundspeicher verfügt, in dem die verschiedenen Schlüsselprogramme abgespeichert sind, und wobei das entsprechende Schlüsselprogramm durch Ausgabe eines kurzen Kennungszeichens durch die zentrale Stelle an den frei programmierbaren Schlüsselrechner abgerufen wird.

Voraussetzung für das erfindungsgemäße System ist, daß die verschiedenen Schlüsselprogramme an sich nicht geheim gehalten werden müssen, ja bekannt werden dürfen und sogar teilweise öffentlich bekannt gemacht werden, wie dies nach der DE-AS 25 58 206, DE-OS 27 15 631, DE-OS 22 31 849 oder nach "Data Encryption Standard" - FIPS PUB 46 des US-National Bureau of Standards vom 15. Januar 1977 vorgeschlagen wurde. Bei all diesen Vorschlägen stellt der Schlüssel das eigentlich geheimzuhaltende Element dar, das daher über einen sicheren, d.h. gegen unbefugten Zugriff durch Dritte geschützten Weg zum Partner überbracht werden muß. Die alleinige Kenntnis des Schlüsselalgorithmus bei einem Dritten bietet diesem keine Ansatzpunkte zu einer unbefugten Dechiffrierung.

Die Realisierung des frei programmierbaren Schlüsselrechners kann vorteilhaft durch einen der modernen Mikroprozessoren erfolgen.

- 1 -

Licentia Patent-Verwaltungs-GmbH          NE2-BK/Ruf/jo
Theodor-Stern-Kai 1                        BK 79/88
D-6000 Frankfurt 70


Patentansprüche


1. System zur Ver- und Entschlüsselung von Daten, die zwischen Sender und Empfänger übertragen werden, wobei sende- bzw. empfangsseitig die Nachrichtenklartexte mittels gleicher Verknüpfungsvorschrift verschlüsselt bzw. wiedergewonnen und die Verknüpfungsvorschrift durch Schlüsselrechner jeweils mit Hilfe eines sowohl im Sender als auch im Empfänger gespeicherten und das Programm der Schlüsselrechner festlegenden Schlüssels erzeugt werden, dadurch gekennzeichnet, daß mindestens der eine Schlüsselrechner beim Sender bzw. Empfänger ein frei programmierbarer Rechner ist, in dessen Programmspeicher das Programm des anderen Schlüsselrechners beim Empfänger bzw. Sender übermittelbar ist.

2. System nach Anspruch 1, dadurch gekennzeichnet, daß die Übermittlung des Programms durch Auslesen des Programmspeichers des anderen Schlüsselrechners und durch Übertragung seines Inhaltes an den einen Schlüsselrechner erfolgt.

3. System nach Anspruch 2, dadurch gekennzeichnet, daß die Übermittlung auf Anforderung des einen Schlüsselrechners erfolgt.

4. System nach Anspruch 1, dadurch gekennzeichnet, daß die Übermittlung des Programms von zentraler Stelle aus veranlaßt wird.

5. System nach Anspruch 4, dadurch gekennzeichnet, daß die zentrale Stelle über ein öffentliches Wählnetz anwählbar ist.

6. System nach Anspruch 5, dadurch gekennzeichnet, daß bei Aufbau der Datenverbindung zwischen Sender und Empfänger die zentrale Stelle automatisch erreichbar ist.

7. System nach Anspruch 4, 5 oder 6, dadurch gekennzeichnet, daß das Programm in der zentralen Stelle gespeichert ist.

8. System nach Anspruch 1, dadurch gekennzeichnet, daß das Programm in einem Hintergrundspeicher des einen Schlüsselrechners gespeichert ist.

9. System nach Anspruch 8 und 4, 5 oder 6, dadurch gekennzeichnet, daß die Veranlassung der Übermittlung durch Ausgabe einer Kennung von der zentralen Stelle an diesen Schlüsselrechner erfolgt.

Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 218 447 (GRETAG) <br> + Seite 1, Zeile 1 - Seite 2, Zeile 2; Seite 6, Zeile 21 - Seite 8, Zeile 22; Fig. 1a, 1b + <br> -- | 1 |
| | CH - A - 411 983 (GRETAG) <br> + Seite 1, Zeile 1 - Seite 2, Zeile 10; Seite 2, Zeilen 15-21 + <br> -- | 1 |
| | US - A - 4 107 458 (CONSTANT) <br> + Spalte 1, Zeile 6 - Spalte 2, Zeile 2 + <br> -- | 1 |
| | DE - A - 2 607 784 (NCR) <br> + Seite 3, Zeile 8 - Seite 4, Zeile 20; Fig. 1 + <br> ---- | 1,4-6 |

**KLASSIFIKATION DER ANMELDUNG (Int Cl.3)**

H 04 L 9/02

H 04 K 1/02

G 09 C 1/00

**RECHERCHIERTE SACHGEBIETE (Int. Cl.3)**

H 04 L 9/00

H 04 K 1/00

G 09 C 1/00

H 04 L 11/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 13-05-1981 | HAJOS |

EPA form 1503.1 06.78